(19) Europäisches Patentamt / European Patent Office / Office européen des brevets

(11) **EP 2 299 852 B1**

(12) **EUROPEAN PATENT SPECIFICATION**

(45) Date of publication and mention
of the grant of the patent:
**05.08.2015 Bulletin 2015/32**

(51) Int Cl.:
*A23L 2/02* (2006.01)          *A23L 2/52* (2006.01)
*A23L 1/30* (2006.01)

(21) Application number: **09779802.9**

(22) Date of filing: **16.06.2009**

(86) International application number:
**PCT/EP2009/057488**

(87) International publication number:
**WO 2010/003787 (14.01.2010 Gazette 2010/02)**

(54) **BEVERAGE COMPOSITION**

GETRÄNKEZUSAMMENSETZUNG

COMPOSITION DE BOISSON

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **16.06.2008 EP 08010905
15.09.2008 EP 08016218**

(43) Date of publication of application:
**30.03.2011 Bulletin 2011/13**

(73) Proprietor: **Eckes-Granini Group GmbH
55268 Nieder-Olm (DE)**

(72) Inventors:
• **POPKEN, Anne M.
55296 Harxheim (DE)**
• **DECHENT, Hans-Mario
55291 Saulheim (DE)**
• **SCHANNE, Sibylle
74074 Heilbronn (DE)**
• **TOUZE, Brigitte
F-57365 Ennery (FR)**

(74) Representative: **Vossius & Partner
Patentanwälte Rechtsanwälte mbB
Siebertstrasse 3
81675 München (DE)**

(56) References cited:
**EP-A- 1 243 586          WO-A-2008/025627
WO-A-2008/090291          WO-A-2008/135643
WO-A-2009/062068          WO-A-2009/062828
DE-A1-102004 052 882**

• **BERMUDEZ-SOTO ET AL.: "Evaluation of
commercial red fruit juice concentrate as
ingredients for antioxidant functional juices"
EUROPEAN FOOD RESEARCH AND
TECHNOLOGY, vol. 219, no. 2, 2004, pages
133-141, XP002557964**
• **MEHRLANDER ET AL.: "Herstellung und
Charakterisierung von Traubensäften aus
Zweistufiger enzymatischer Behandlung und
daraus gewonnenen Polyphenolextrakten"
DEUTSCHE LEBENSMITTEL-RUNDSCHAU, vol.
100, no. 3, 2004, pages 77-83, XP008115515**

**Description**

The present invention relates to beverages comprising a combination of fruits with very high natural polyphenol content and a characteristic polyphenol composition.

For many people, health promoting dietary recommendations bring focus on consuming healthy drinks, for example fruit juices or tea. The demand to boost health actively is very divers and covers a wide variety of drink recipes. There are a lot of varieties possible, from a drink with an overall health requirement to a special medical product, which are attractive from a health related point of view on the one hand. On the other hand, people more and more would like to enjoy indulgence, and therefore requirements for an excellent smell and taste are increasing. Refreshing and tasty fruit juices supply the body with liquids and essential nutrients as: well. And they can do much more: fruit juices and fruit purees, especially of red berries and red grapes, are a superb provider of polyphenols as secondary plant components.

Diets rich in fruits and vegetables (F&V) are usually considered to protect against the development of chronic illnesses such as Coronary Heart Disease (CHD) and cancer, which are the major killer diseases among affluent populations. Nutritionists are recommending an increase in the consumption of fruits and vegetables in order to impede or prevent the incidence of chronic diseases and to supply adequate amounts of vital nutrients, fibre and antioxidants for maintaining healthy bodies.

It has been recognized for some time that these beneficial effects of fruits & vegetables are due, at least in part, to the antioxidant components of these foodstuffs, which can inhibit cellular damage by free radicals. In the body, free radical damage arises due to reactive oxygen species being formed endogenously within the tissues, and also as a result of exposure to radicals arising from cigarette smoke, ionising radiation, air pollution and other environmental insults. These free radicals have the potential to interact with biological molecules such as proteins, lipids and DNA, and they are implicated in the etiology of diverse diseases.

The antioxidant components include, e.g., polyphenols which are considered to be beneficial to health and the general anti-oxidative activity of polyphenols has been discussed in the art.

A food supplement comprising gamma-tocopherol, flavonoids, carnosic acid and carnosol is described in FR 2899768 A1 to prevent cardiovascular disease and to reduce aging. JP 2000125823 A describes a drink containing red grape extract powder, grape seed extract powder, and galactooligosaccharide as main components which is said to exhibit an excellent beauty effect and to be useful for preventing arteriosclerosis. AU 2006235822 A1 relates to a pharmaceutical, a dietary supplement or a food additive comprising a cocoa procyanidin monomer and/or oligomer and a sterol and/or stanol based cholesterol lowering agent which is said to promote cardiovascular health and/or reduce the risk of heart disease. The use of procyanidin contained in grape extract to lower lipoprotein and cholesterol levels is described in EP 713706 A2. A composition comprising a blueberry fruit derived product as active ingredient is described in JP 2006306797 A to have anti-inflammatory properties. US 20060088610 A1 relates to a composition useful for the prevention and treatment of inflammatory conditions e.g. rheumatoid arthritis, cardiovascular diseases, cancer and diabetes, comprising myricetin-3-$\beta$-xylopyranoside, quercetin-3-$\beta$-glucoside, quercetin-3-$\alpha$-arabinopyranoside, 3'-methoxyquercetin-3-$\alpha$-xylopyranoside, quercetin-3-O-(6"-p-coumaroyl)-$\beta$-galactoside, and quercetin-3-O-(6"-benzoyl)- $\beta$-galactoside which have been extracted from craunberries. WO 2006083666 A1 relates to a therapeutic composition comprising a blend of food extracts that delivers catechins, proanthocyanidines and curcumin, which are said to be effective for the purpose of reducing markers of chronic inflammation (C-reactive protein (CRP), cyclooxygenase-2 (COX-2), 5-lipoxygenase (5-LOX), tumor necrosis factor alpha (TNF-$\alpha$), nuclear factor $\kappa$B (NF-$\kappa$B), interleukin 6 (IL 6) or interleukin 1-$\beta$ (IL1-$\beta$), thereby reducing cardiovascular disease risks and joint inflammation. The use of grape seed procyanidin extract for the prevention or reduction of stress-induced gastric injury is described in US 6291517 B1.

EP 0954986 A3 describes an antioxidant herbal beverage based on plant extracts having cardioprotective and collagen-stabilizing effects and lowering blood homocysteine levels containing B vitamins, folic acid and colorless polyphenols. In this document it is pointed out that fruit juices belong to drinks with high added value regarding health and indulgence, the ingredients thereof highly contribute to physical well-being. Among their content of essential vitamins, minerals, fruit acids and fibres, small amounts of further components in fruits and juices thereof appear to be responsible for additional positive effects on human physiology. A wide variety of published research results indicate complex associations between those components known as secondary plant metabolites or bioactive substances and human metabolism. A relationship between secondary metabolites and the "French Paradox" is assumed which means that despite a nutrition with relatively high fat content the frequency of CHD is relatively low in France. Secondary metabolites like procyanidines and flavanols from red wine play an important role in this regard. So an inverse relationship between polyphenol intake and mortality from myocardial infarct was observed. These components which have a high antioxidative potential, mainly based on scavenging of oxygen radicals, are widely distributed in European berry fruits mainly in red grapes and lingonberries.

WO 2008025627 A1 concerns a liquid food product comprising fruits and vegetables and further comprising Helianthus tuberosus. DE 102004052882 A1 discloses a liquid food additive comprising a selection of fruit and vegetable concentrates which is said to strengthen the immune system and to reduce the risk of cardiovascular diseases.

A comparison of the antioxidant potency of polyphenol-rich beverages including pomegranate juice, apple juice, açaí juice, black cherry juice, blueberry juice, cranberry juice, Concord grape juice, orange juice, red wines and iced tea beverages has been published by N. P. Seeram et al. in J. Agric. Food Chem., 56 (4), pp 1415-1422, 2008. M.J. Bermúdez-Sota et al., Eur. Food Res. Technol. (2004), 219, 133-141, have investigated the phenolic profiles of nine red fruit commercial juice concentrates with a view to their use as ingredients for antioxidant functional juices.

An object of the present invention is the provision of a beverage which combines a high content of beneficial polyphenols resulting in an increased health effect with a pleasant taste.

The present inventors have found that a beverage comprising a combination of certain polyphenols and having a high total polyphenol content and a high trolox equivalent antioxidative capacity (TEAC) can improve the vascular function (vascular dilatation capacity). In addition, it has been found that the beverage can have a positive influence on cellular alteration and oxidative stress and anti-inflammatory properties.

Specifically, the present invention relates to the following items (1) to (24):

(1) Beverage comprising pulp, puree or juice of at least grape, acerola, lingonberry and apple, and comprising flavonoids, phenolic acids and water, wherein the total polyphenol content, determined according to the Folin method and expressed as catechin equivalents, is at least 2.5 g/L and the trolox equivalent antioxidative capacity (TEAC) is at least 20 mmol/L, and the beverage has a specific gravity of 8 to 20 °Brix.

(2) Beverage according to item (1), which further comprises lignans, stilbenoids and/or ellagitannins.

(3) Beverage according to item (1), which further comprises lignans, stilbenoids and ellagitannins.

(4) Beverage according to any of items (1) to (3), wherein the flavonoids comprise procyanidines.

(5) Beverage according to any of items (1) to (4) wherein the total polyphenol content consists of poylphenols of fruits.

(6) Beverage according to any of items (1) to (5), wherein the content of non-polymerized polyphenols, determined according to the HPLC method and expressed as catechin equivalents, is at least 500 mg/L.

(7) Beverage according to any one of items (1) to (6), comprising a total content of monomeric anthocyanes, determined according to the HPLC method, of at least 200 mg/L.

(8) Beverage according to item (7), wherein the weight ratio of the contents of any monomeric anthocyanes and any non-polymerized colorless polyphenols is 1:1 to 1:4, preferably 1:1 to 1:2.

(9) Beverage according to item (1), wherein the mixture of fruit juice(s), fruit pulp(s) and/or fruit puree(s) provides a polyphenol content of at least 2.5 g/L, preferably 3.0 g/L, based on the total volume of the beverage.

(10) Beverage according to any one of items (1) to (9) which consists of raw materials obtainable from fruits and optional additional water.

(11) Beverage according to any one of items (1) to (10), which is a fruit juice.

(12) Beverage according to any one of items (1) to (11), wherein the flavonoids comprise flavonols and flavanols including procyanidines, and anthocyanes.

(13) Beverage according to any one of items (2) to (12), containing the ellagitannins of strawberries.

(14) Beverage according to any one of items (1) to (13), having a specific gravity of 10 to 17 °Bx, preferably 13 to 15 °Bx.

(15) Beverage according to any one of items (1) to (14), having a pH of 3.0 to 4.2, preferably 3.4 to 4.

(16) Beverage according to any one of items (1) to (15), having an ascorbic acid content of 50 to 1000, preferably 400 to 1000 mg/L.

(17) Beverage according to any one of items (1) to (16), having a trolox equivalent antioxidative capacity of at least 30 mmol/L.

(18) Beverage according to any one of items (1) to (17), having a total polyphenol content, determined according to the folin method and expressed as catechin, of at least 3.0 g/L.

(19) Beverage according to any one of items (1) to (18), wherein at least 40 wt-% of any flavanols, including procyanidines, contained in the beverage are the flavanols of lingonberries and grapes.

(20) Beverage according to any one of items (1) to (19), wherein at least 50 wt-% of any procyanidines contained in the beverage are the procyanidines of lingonberries and grapes.

(21) Beverage according to any one of items (1) to (20), wherein the content of cyanidine-3-glycoside is greater than 30 wt-% of the total anthocyane content.

(22) Beverage according to any one of items (1) to (21), wherein the content of delphinidine-3-glycoside is greater than 10 mg/L.

(23) Beverage according to any one of items (1) to (22), wherein the sum of the contents of flavanols, including procyanidines, and flavonols is greater than 60 mg/L.

(24) Beverage according to any one of items (1) to (23), containing at least 10 different anthocyanes, each having a content of at least 5 mg/L.

Due to the high concentration of polyphenols in the beverage according to the present invention, which is higher than e.g. in red wine, serving sizes of less than 330 ml, less thab 250 ml or even less than 200 ml are already sufficient to provide the consumer with a significant amount of antioxidants.

It should be understood that the polyphenols are preferably natural polyphenols, i.e. polyphenols as they are contained in natural raw materials, in particular fruits. It is particularly preferred that the polyphenol content of the beverage according to the invention consists of these natural polyphenols and particularly of polyphenols contained in fruits.

The high polyphenol content of the beverage can be favourably achieved by selecting raw materials with very high natural polyphenol contents. For fruits as raw materials, the fruit variety, the country of origin and the harvest time may influence the total polyphenol content. Due to the small serving sizes which are needed to provide the consumer with this health benefits, only small amounts of sugars will be consumed. This gives an additional positive effect for a healthy nutrition. The regular daily consumption, which is necessary for vascular benefit, is nutritionally acceptable with a controlled sugar intake.

The consumption of one drink per day of the inventive beverage contributes significantly to the polyphenol consumption in an equilibrated diet able to prevent some diseases, like coronary heart disease. The beverage allows improving vascular health, i.e. to provide health benefits specifically on the vascular system/status, via the most natural way. These benefits include an improvement of the vascular status due to a higher dilatation capability. Furthermore, as will be discussed below, the presently claimed beverage provides a characteristic polyphenol composition which has an increased health benefit.

As set out above, the beverage according to the invention comprises flavonoids, phenolic acids and water as essential components. Preferred further components are lignans, stilbenoids and/or ellagitannins. It is particularly preferred that the beverage according to the invention comprises water, flavonoids, phenolic acids, lignanes, stilbenoids and ellagitannins. Moerover, it is preferred that the flavonoids comprise procyanidines.

In a broad sense, polyphenols are known in the art as a class of secondary plant metabolites. They are aromatic compounds found in a variety of plants, which are characterized by the presence of at least two, often three or more phenolic hydroxy groups in their molecule. Polyphenols according to the present invention include flavonoids, lignans, stilbenoids, phenolic acids and ellagitannins. Unless indicated otherwise, any reference herein to polyphenols in general or to specific classes of polyphenols, such as flavonoids, includes the glycosides of the respective compounds.

Flavonoids are a class of secondary plant metabolites, which are derived from the 2-phenylchromen-4-one (2-phenyl-1,4-benzopyrone) structure. As noted above, reference herein to flavonoids in general as well as reference to specific flavonoids includes the glycosides of these compounds. In particular, flavonoids according to the present invention inlcude flavones, flavonols, flavanols, including procyanidines, and anthocyanes. In addition, flavanones and flavanonols belong to the group of flavonoids. Preferably, the beverages are essentially free of flavanones, i.e comprise less than 5 wt% of flavanones, preferably less than 1 wt%, more preferably less than 0.1 wt% and even more preferably less that 0.01 wt%. Flavanonols may be present in the beverage according to the present invention.

Flavones have a 2-phenylchromen-4-one skeleton with no hydroxyl group substitution on the carbon at position 3. Examples thereof include luteolin, apigenin, and tangeritin.

Flavonols or 3-hydroxyflavones have a 3-hydroxy-2-phenylchromen-4-one skeleton. Examples thereof include glycosides of quercetin, kaempferol, myricetin, and isorhamnetin. Preferably, the beverage contains the flavonols of red fruits, red grapes or apples.

Flavanols have a 2-phenyl-3,4-dihydro-2H-chromen-3-ol skeleton. Examples thereof include catechin, gallocatechin, epicatechin and epigallocatechingallat. Preferably, the beverage contains the flavanols of red fruits, red grapes and/or apples. Unless otherwise indicated, the term "flavanols" as used herein also includes procyanidines as defined below.

Procyanidines, also referred to as proanthocyanidines or condensed tannins, are polymers of 2 to 50 (or more) flavanol units (such as catechin). They are joined by carbon-carbon bonds which are not susceptible to being cleaved by hydrolysis. Preferably, the beverage contains the procyanidines of red fruits, red grapes and/or apples.

Anthocyanidines are sugar-free counterparts of anthocyanes. They can be identified based on the structure of a large group of polymethine dyes, the benzopyrylium (chromenylium) ion. In particular anthocyanes are salt derivatives of the 2-phenylchromenylium cation also known as flavylium cation. Examples of anthocyanes include glycosides of cyanidin, delphinidin, pelargonidin, malvidin, peonidin and petunidin. Preferably, the beverage contains the anthocyanes of red fruits and/or red grapes.

Flavanones have a 2,3-dihydro-2-phenylchromen-4-one skeleton with no hydroxyl group substitution on the carbon at position 3. Examples thereof include glycosides of hesperetin, naringenin, eriodictyol, and homoeriodictyol.

Phenolic acids according to the present invention (phenolic carboxylic acids) include in particular compounds selected from hydroxybenzoic acids and hydroxycinnamic acids. Examples of the group of hydroxybenzoic acids include gallic acid, salicylic acid, protocatechuic acid and vanillic acid. Examples of the group of hydroxycinnamic acids include ferulic acid, caffeic acid, p-coumaric acid, and chlorogenic acid and related esters and/or glycosides, for example coutaric acid and caftaric acid. Preferably, the beverage contains the phenolic acids of grape, acerola, strawberry, lingonberry, blueberry, aronia, apple and/or. boysenberry, more preferably lingonberry.

Lignans are polyphenolic substances derived from phenylalanine via dimerization of substituted cinnamic alcohols, known as monolignols, to a dibenzylbutane skeleton. Examples of lignans include sekoisolarisiresinole, lariciresinol, matairesinol, and pinoresinol. Preferably, the beverage contains the lignans of lingonberries and/or strawberries.

Stilbenoids (stilbenes) are hydroxylated derivatives of stilbene, e.g. resveratrol and pterostilbene. Preferably, the beverage contains the stilbenes of lingonberries, blueberries, strawberries and/or red grapes.

Ellagitannins include e.g. ellagic acid and ellagic acid glycosides. Preferably, the beverage contains the ellagitannins of strawberries.

Non-polymerized polyphenols according to the present invention include flavonols, flavanols, (including procyanidine B1 and B2), flavones, flavanones, dihydrochalcones, phenolic acids and anthocyanes as defined above. Non-polymerized colorless polyphenols are all non-polymerized polyphenols excluding anthocyanes.

Red fruits according to the present invention include lingonberries, aronia, red grapes, strawberries and blueberries. Red fruits used for the beverage in accordance with the invention include lingonberries and optionally aronia, or combinations of lingonberries with other red fruits.

Beverages which are known as having high polyphenol contents are frequently enriched with polyphenols, for example using plant extracts having particularly high polyphenol contents including seed extracts, skin extracts, e.g. grape skin extracts, or other extracts, such as tea extracts. As noted above, the polyphenols contained in the beverage according to the invention are preferably exclusively polyphenols derived from fruits. This means, for example, that the beverage according to the invention is preferably free from components derived from tea such as tea extracts.

Moreover, it is preferred that a polyphenol content of at least 2.5 g/L, more preferably of at least 2.8 g/L, and even more preferably of 3.0 g/L is achieved without the contribution of fruit extracts. It will be understood that such fruit extracts can be present in the beverage according to the invention if it is desired to reach total polyphenol contents exceeding significantly beyond the limits mentioned above. However, most preferably, any plant extracts including fruit extracts are absent from the beverage according to the invention. The present invention can provide beverages having a high total polyphenol content without the need for enrichment by plant extracts.

Preferably, the beverage of the present invention contains or more preferably consists of raw materials derived from fruits and optional added water. Typically, such raw material is selected from whole fruits, fruit juice, fruit puree, fruit pulp, fruit extracts, fruit concentrate, frozen or freeze dried fruits, fruit concentrate and fruit pulp or mixtures thereof. Most preferably, the beverage according to the invention consists of a mixture of fruit juice(s), and/or fruit puree(s) and/or fruit pulp(s). If necessary, the water content of this mixture or of its components can be adapted by adding/removing water. However, it is generally desirable to essentially maintain the natural water content of the fruit juice(s)/fruit puree(s)/fruit pulp(s) in the final product. Thus, as will be understood by the skilled reader, the water contained in the beverage according to the invention is preferably water derived from fruits, or it is contained in the beverage in amounts as they could be obtained by mixing only fruit components as mentioned above.

Preferably, the beverage of the present invention is prepared by mixing different juices, preferably single strength juice (according Council Directive 2001/112/EC relating to fruit juices and certain similar products intended for human consumption), fruit juice concentrates fruit pulps and/or fruit purees. In addition to the above raw materials, water may be added to the beverage composition. If water is added to the composition, e.g. to dilute concentrates used in the preparation of the beverage, the total content of water in the final product should not be higher than the water content which would be achieved by using exclusively raw materials with the natural water content of the respective fruits, i.e. fruit juices, fruit pulps and/or fruit purees.

The total content of fruit products selected from puree, pulp and juice and optionally added water in the beverages of the present invention is preferably 5.0 to 100 wt-%, more preferably 75 to 100 wt-%, even more preferably 90 to 100 wt-% or 95 to 100 wt-%, most preferably 100 wt-%, based on the total weight of the beverage.

It is particularly preferred that the beverage is a fruit juice according to the meaning of this term defined in Council Directive 2001/112/EC.

A fruit juice is the fermentable but unfermented product obtained from fruit which is sound and ripe, fresh or preserved by chilling, of one or more kinds mixed together, having the characteristic colour, flavour and taste typical of the juice of the fruit from which it comes. Flavour, pulp and cells from the juice which are separated during processing may be restored to the same juice (according Council Directive 2001/112/EC relating to fruit juices and certain similar products intended for human consumption).

According to the present invention, a fruit concentrate, including fruit juice concentrate and fruit pulp concentrate, means a fruit product having reduced water content with respect to the original fruit juice or fruit pulp. Preferably, the water content is reduced to 30 wt% or less, more preferably 20 wt% or less, even more preferably 10 wt% or less. The fruit concentrate may be prepared by any conventional method, e.g. the water may be evaporated under vacuum and/or heat.

A fruit puree is the fermentable but unfermented product obtained by sieving the edible part of whole or peeled fruit without removing the juice. A concentrated fruit puree is the product obtained from fruit puree by the physical removal of a specific proportion of its water content.

Pulp or cells are the products obtained from the edible parts of fruit of the same kind without removing the juice. To the beverage, according to the invention, sweeteners typically used in the beverage industry may be added, e.g. saccharose, glucose, fructose, invertsugar syrup and glucose syrup, fruit sweeteners, sugar substitutes like sorbitol, mannitol as well as Aspartam, Acesulfam K, Sucralose, Saccharin, Neohesperidin, Cyclamat and Thaumatin singly or as a blend. Alternatively or in combination with the above, a sweetening component derived from Stevia Rebaudiana Bertoni (e.g. steviol glycoside or Rebaudioside A) may be used. However, the beverage according to the present invention preferably does not contain any added sweeteners.

According to the invention, aroma substances can be comprised as additives in the beverage, especially aroma fractions obtained as top notes from a concentration process of the fruits used in this invention. It is preferred that no aroma substances be added to the beverage with the exception of aroma substances which recover the original aroma of fruit components contained in the beverage, which may have been reduced during a concentration process.

Also lemon juice, lemon juice concentrate and/or acids, like citric acid, malic acid, lactic acid or tartaric acid may be added to achieve a balanced sweetness-acidity ratio. Beverages according the invention are preferably free of tartaric acid, more preferably free of lemon juice, lemon juice concentrate and/or acids, malic acid, lactic acid and tartaric acid.

Other optional additives to the beverage according the invention comprise e.g. pectin, guar gum, locust bean gum, alginates, gum arabic, tara gum and xanthan gum. Preferably, no such additives are added to the beverage.

The specific gravity of the beverage of the present invention is 8 to 20 °Brix, preferably from 10 to 20 °Bx, more preferably 10 to 17 °Bx, most preferably 13 to 15 °Bx. As established in the art, °Bx (Degree Brix) is a measure of the mass ratio of dissolved sugar to water in a liquid. Specificly, a solution having 1 °Bx means that the solution has the same gravity as a solution of 1 g saccharose in 100 g of a saccharose/water-solution, i.e. 1 wt% saccharose in water, at 20 °C. 1°Bx is about 4 °Oechsle.

The pH of the beverage of the present invention is preferably from 3.0 to 4.2, more preferably 3.4 to 4.

The ascorbic acid (Vitamin C) content of the beverage of the present invention is preferably at least 50 mg/L, more preferably at least 100 mg/L and most preferably at least 400 mg/L. It is particularly preferred that the beverage according to the invention contains a combination of fruit juice(s), and/or fruit puree(s) and/or fruit pulp(s) which allows the beverage to reach or exceed these limits without taking into account the ascorbic acid provided by any additional components, which may be added, if desired, but are preferably absent. The amount of ascorbic acid is often below 1000 mg/L. Vitamins may be added as such to the beverage of the present invention, but are preferably not added.

The trolox equivalent antioxidative capacity (TEAC) of the beverage of the present invention is at least 20 mmol/L, preferably at least 25 mmol/L, more preferably at least 28 mmol/L and most preferably at least 30 mmol/L. It is particularly preferred that the beverage according to the invention contains a combination of fruit juice(s), and/or fruit puree(s) and/or fruit pulp(s) which allows the beverage to reach or exceed these limits without taking into account the TEAC provided by any additional components, which may be added, if desired, but are preferably absent. Further, the trolox equivalent antioxidative capacity is preferably not higher than 100 mmol/L, more preferably not higher than 60 mmol/L, even more preferably not higher than 50 mmol/L and most preferably not higher than 40 mmol/L.

The TEAC-Value (Trolox Equivalent Antioxidative Capacity) represents the total antioxidative potential of the sample with respect to the vitamin E derivative Trolox.

The total polyphenol content determined according to the Folin method and expressed as catechin equivalents, of the beverage of the present invention is at least 2.5 g/L, preferably at least 2.8 g/L and more preferably at least 3.0 g/L. It is particularly preferred that the beverage according to the invention contains a combination of fruit juice(s), and/or fruit puree(s) and/or fruit pulp(s which allows the beverage to reach or exceed these limits without taking into account the polyphenols provided by any additional components, which may be added, if desired, but are preferably absent. Further, the total polyphenol content is preferably not higher than 10 g/L, more preferably not higher than 6 g/L, even more preferably not higher than 5 g/L, and still more preferably not higher than 4.5 g/L. Most preferably, the total polyphenol content of the beverage is from 3 to 4 g/L.

All combinations of the preferred values of the TEAC value and the total polyphenol content should be considered to be expressly disclosed, e.g. the combination of a TEAC of at least 28 mmol/L and a.total polyphenol content of at least 3.0 g/L. Similarly, all combinations of all other preferred embodiments disclosed herein should be considered to be expressly disclosed.

For example, in preferred embodiments, the beverage according to the present invention comprises water, flavonoids, phenolic acids, lignanes, stilbenoids, and ellagitannins; or water, phenolic acids, lignanes, stilbenoids, ellagitannins, procyanidines and other flavonoids in addition to procyanidines; exibits a specific gravity of from 10 to 20 °Bx, a trolox equivalent antioxidative capacity of from 30 to 40 mmol/L, and has a total polyphenol content of from 3 to 4 g/L.

By the Folin method, the total polyphenol content of a beverage including monomeric, oligomeric and polymeric polyphenols can be determined.

The content of non-polymerized polyphenols (including monomeric anthocyanes) and the content of procyanidines can be measured by the HPLC method. In the beverage according to the present invention, the content of non-polymeric polyphenols, determined according to the HPLC method is preferably at least 500 mg/L. The content of monomeric anthocyanes, determined according to the HPLC method is preferably at least 200 mg/L, more preferably at least 250 mg/L.

The TEAC value, the total polyphehol content and the contents of specific components may be analysed in the ready mixed beverage, or in case the different raw materials interfere in the measurement, these values may be measured in the raw materials comprised in the beverage and the total TEAC and total polyphenol content and the contents of specific components of the beverage may be calculated as the sum of the respective contents in the raw material weighted by the amounts of the raw materials in the recipe of the beverage.

While the monomeric anthocyanes form a class of colored polyphenols, the remaining non-polymerized polyphenol are mainly colorless. The content of non-polymerized colorless polyphenols therefore corresponds to the difference between the content of non-polymeric polyphenols and the content of monomeric anthocyanes.

The weight ratio of monomeric anthocyanes to non-polymerized colorless polyphenols is preferably 1:1 to 1:4, more preferably 1:1 to 1:3, even more preferably 1:1 to 1:2.

The beverage according to the present invention is preferably a beverage wherein at least 40 wt-% of flavanols, including procyanidines, contained in the beverage are the flavanols of lingonberries and grapes.

Further preferred is a beverage wherein at least 50 wt-% of procyanidines contained in the beverage are the procyanidines of lingonberries and grapes.

Additionally preferred is a beverage wherein the sum of cyanidine-3-glycoside is greater than 30 wt-% of the total anthocyanes content.

The beverage according to the present invention preferably has a content of delphinidine-3-glycoside greater than 10 mg/L, preferably from 15 to 50 mg/L, more preferably from 20 to 40 mg/L, most preferably from 25 to 30 mg/L.

Further preferred is a beverage wherein the sum of the contents of flavanols, including procyanidines, and flavonols is greater than 60 mg/L

Preferably the beverage according to the present invention contains at least 5, preferably at least 6 or 7, more preferably 10 different anthocyanes, each of a content of at least 5 mg/L, more preferably at least 7 mg/L, 10 mg/L.

The beverage according to the present invention preferably comprises polyphenols in contents, measured according to the HPLC method, in the shown ranges: sum delphinidin-glycoside: greater than 10 mg/L, preferably from 15 to 50 mg/L, more preferably from 20 to 40 mg/L, most preferably from 25 to 30 mg/L; sum cyanidin-glycoside: greater than 50 mg/L, preferably from 70 to 200 mg/L, more preferably from 100 to 150 mg/L; sum petunidin-glycoside: greater than 5 mg/L, preferably from 7 to 30 mg/L, more preferably from 10 to 20 mg/L; sum pelargonidin-glycoside: greater than 5 mg/L, preferably from 7 to 30 mg/L, more preferably from 10 to 20 mg/L; sum peonidin-glycoside: greater than 5 mg/L, preferably from 10 to 40 mg/L, more preferably from 15 to 25 mg/L; sum malvidin-glycoside: greater than 20 mg/L, preferably from 30 to 100 mg/L, more preferably from 40 to 70 mg/L; sum hydroxybenzoic acids: greater than 10 mg/L, preferably from 15 to 50 mg/L, more preferably from 20 to 30 mg/L; sum hydroxycinnamic acids: greater than 50 mg/L, preferably from 80 to 250 mg/L, more preferably from 120 to 180 mg/L; sum phenolic acids: greater than 50 mg/L, preferably from 100 to 300 mg/L, more preferably from 150 to 250 mg/L; sum flavonols: greater than 5 mg/L, preferably

**EP 2 299 852 B1**

from 10 to 5.0 mg/L, more preferably from 15, to 25 mg/L, and sum monomeric flavanols : greater than 5 mg/L, preferably from 10 to 50 mg/L, more preferably from 20 to 30 mg/L.

Preferably, the beverage according to the invention contains a mixture of the pulp, puree and/or juice of at least 5 different fruits, and particularly preferably of at least 6 or 7 different fruits.

The beverage of the present invention comprises a combination of pulp, puree and/or juice of grape, acerola, lingonberry, and apple, and optionally pulp, puree and/or juice of fruits selected from the group of: strawberry, blueberry, aronia, blackberry, elderberry, blackcurrant, pomegranate and boysenberry. Preferably, the beverage of the present invention comprises a combination of raw materials containing grape juice or grape juice concentrate, acerola puree, lingonberry juice or lingonberry juice concentrate, and apple puree, apple juice or apple juice concentrate, and optionally raw materials selected from strawberry puree, blueberry puree, aronia juice or aronia juice concentrate and boysenberry puree.

The beverage according to the present invention comprises pulp, puree or juice of at least grape, acerola, lingonberry and apple. It is preferred that the beverage additionally comprises pulp, puree or juice of (1) strawberry, blueberry and aronia and optionally boysenberry or (2) blackberry, aronia and blackcurrant. Particularly preferred embodiments according to the invention are beverages consisting of these combinations of fruit raw materials. The beverage according to the present invention preferably contains not more than 10 % v/v, more preferably not more than 5 % v/v, based on fruit juice of each of concord grape, mangosteen, mora, umbu, and/or açai. Most preferably, mangosteen and umbu are absent as fruit components.

The beverage according to the present invention preferably comprises grape juice in an amount from 40 to 80 %v/v, more preferably from 50 to 75 %v/v; most preferably from 60 to 70 %v/v. Grape is preferably added as a raw material such as to provide a contribution to the total polyphenol content (Folin-Method) in the beverage of from 1.000 to 2.000 mg/L, more preferably from 1.400 to 1.800 mg/L. For example, grape juice may be used as such. Alternatively, grape juice concentrate, having a specific gravity of from 50 to 80 °Brix (preferably from 60 to 70°Brix) and a total polyphenol content (Folin-Method) of from.7.000 to 13.000 mg/kg (preferably from 9.000 to 11.000 mg/kg) may be added to the beverage in an amount of from 100 to 200 g per Liter of the beverage, more preferably from 130 to 180 g/L.

The beverage according to the present invention preferably comprises acerola puree or acerola juice or juice concentrate. If puree is used, it is generally used in an amount from 1 to 10 %v/v, more preferably from 2 to 8 %v/v; most preferably from 3 to 5 %v/v. Acerola is preferably added as a raw material such as to provide a contribution to the total polyphenol content (Folin-Method) in the beverage of from 200 to 500 mg/L, more preferably from 250 to 420 mg/L. For example, acerola puree, having a specific gravity of from 5 to 10 °Brix (preferably from 6 to 8 °Brix) and a total polyphenol content of from 7.000 to 13.000 mg/kg (preferably from 9.000 to 11.000 mg/kg) may be added to the beverage in an amount of from 20 to 60 g per Liter of the beverage, more preferably from 25 to 45 g/L.

The beverage according to the present invention preferably comprises lingonberry juice or puree. If juice is used, it is generally used in an amount from 1 to 10 %v/v, more preferably from 2 to 8 %v/v; most preferably from 4 to 6 %v/v. Lingonberry is preferably added as a raw material such as to provide a contribution to the total polyphenol content (Folin-Method) in the beverage of from 100 to 200 mg/L, more preferably from 140 to 180 mg/L. For example, lingonberry juice may be used as such or lingonberry juice concentrate, having a specific gravity of from 50 to 80 °Brix (preferably from 60 to 70°Brix) and a total polyphenol content (Folin-Method) of from 15.000 to 25.000 mg/kg (preferably from 19.000 to 23000 mg/kg) may be added to the beverage in an amount of from 5 to 12 g per Liter of the beverage, more preferably from 7 to 10 g/L.

The beverage according to the present invention preferably comprises apple puree, apple juice or apple juice concentrate. If puree is used, it is generally used in an amount from 5 to 20 %v/v, more preferably from 7 to 15 %v/v; most preferably from 8 to 12 %v/v. Apple is preferably added as a raw material such as to provide a contribution to the total polyphenol content (Folin-Method) in the beverage of from 100 to 200 mg/L, more preferably from 140 to 180 mg/L. For example, apple puree, having a specific gravity of from 10 to 20 °Brix (preferably from 13 to 15 °Brix) and a total polyphenol content (Folin-Method) of from 1.000 to 2.000 mg/kg (preferably from 1.300 to 1.700 mg/kg) may be added to the beverage in an amount of from 50 to 200 g per Liter of the beverage, more preferably from 70 to 150 g/L.

The beverage according to the present invention preferably comprises aronia juice in an amount from 1 to 10 %v/v, more preferably from 2 to 8 %v/v; most preferably from 3 to 5 %v/v. Aronia is preferably added as a raw material such as to provide a contribution to the total polyphenol content (Folin-Method) in the beverage of from 200 to 500 mg/L, more preferably from 300 to 400 mg/L. For example, aronia juice may be used as such, or aronia juice concentrate, having a specific gravity of from 50 to 80 °Brix (preferably from 60 to 70°Brix) and a total polyphenol content (Folin-Method) of from 25.000 to,45.000 mg/kg (preferably from 30.000 to 40.000 mg/kgmay be added to the beverage in an amount of from 5 to 20 g per Liter of the beverage, more preferably from 7 to 14 g/L.

The beverage according to the present-invention preferably comprises strawberry puree in an amount from 0 to 20 %v/v, more preferably from 5 to 15 %v/v; most preferably from 8 to 13 %v/v. Strawberry is preferably added as a raw material such as to provide a contribution to the total polyphenol content (Folin-Method) in the beverage of from 0 to 500 mg/L, more preferably from 200 to 300 mg/L. For example, strawberry puree, having a specific gravity of from 5

8

to 12 °Brix (preferably from 6 to 9 °Brix) and a total polyphenol content (Folin-Method) of from 1.500 to 3.000 mg/kg (preferably from 2.200 to 2.800 mg/kg) may be added to the beverage in an amount of from 0 to 200 g per Liter of the beverage, more preferably from 70 to 150 g/L.

The beverage according to the present invention preferably comprises blueberry puree in an amount from 0 to 20 %v/v, more preferably from 3 to 15 %v/v; most preferably from 5 to 12 %v/v. Blueberry is preferably added as a raw material such as to provide a contribution to the total polyphenol content (Folin-Method) in the beverage of from 0 to 500 mg/L, more preferably from 200 to 300 mg/L. For example, blueberry puree, having a specific gravity of from 5 to 15 °Brix (preferably from 7 to 10 °Brix) and a total polyphenol content (Folin-Method) of from 4.000 to 7.000 mg/kg (preferably from 5.000 to 6.000 mg/kg) may be added to the beverage in an amount of from 0 to 200 g per Liter of the beverage, more preferably from 50 to 120 g/L.

The beverage according to the present invention preferably comprises boysenberry puree, juice or juice concentrate. If puree is used, it is generally used in an amount from 0 to 10 %v/v, more preferably from 1 to 7 %v/v; most preferably from 2 to 5 %v/v. Boysenberry is preferably added as a raw material such as to provide a contribution to the total polyphenol content (Folin-Method) in the beverage of from 0 to 50 mg/L, more preferably from 20 to 40 mg/L.. For example, boysenberry pùree, having a specific gravity of from 5 to 15 °Brix (preferably from 7 to 10 °Brix) and a total polyphenol content (Folin-Method) of from 2.000 to 4.000 mg/kg (preferably from 2.500 to 3.500 mg/kg) may be added to the beverage in an amount of from 0 to 20 g per Liter of the beverage, more preferably from 5 to 15 g/L.

The beverage according to the present invention preferably comprises blackberry puree in an amount from 0 to 15 %v/v, more preferably from 2 to 12 %v/v; most preferably from 3 to 7 %v/v: Blackberry is preferably added as a raw material such as to provide a contribution to the total polyphenol content (Folin-Method) in the beverage of from 0 to 500 mg/L, more preferably from 50 to 300 mg/L. For example, blackberry puree, having a specific gravity of from 5 to 15 °Brix (preferably from 7 to 10 °Brix) and a total polyphenol (Folin-Method). content of from 2.000 to 5.000 mg/kg (preferably from 3.000 to 4.000 mg/kg) may be added to the beverage in an amount of from 0 to 100 g per Liter of the beverage, more preferably from 20 to 60 g/L.

The beverage according to the present invention preferably comprises blackcurrant puree, juice or juice concentrate. If puree is used, it is generally used in an amount from 0 to 20 %v/v, more preferably from 3 to 15 %v/v; most preferably from 5 to 12 %v/v. Blackcurrant is preferably added as a raw material such as to provide a contribution to the polyphenol content (Folin-Method) in the beverage of from 0 to 800 mg/L, more preferably from 300 to 500 mg/L. For example, blackcurrant puree, having a specific gravity of from 10 to 18 °Brix (preferably from 12 to 15 °Brix) and a total polyphenol (Folin-Method) content of from 3.000 to 6.000 mg/kg (preferably from 3.500 to 4.500 mg/kg) may be added to the beverage in an amount of from 0 to 200 g per Liter of the beverage, more preferably from 50 to 130 g/L.

The beverages of the present invention are preferably storage stable. More preferably the beverages of the present invention have a shelf life of at least 3 months, even more preferably 6 months at temperatures below +8°C. If stored in Barrier PET, the product is preferably stable at ambient temperatures (20 °C) for at least 6 moths.

The invention therein comprises a procedure for the production of a beverage described above wherein ingredients are blended and optionally diluted with water to the desired concentration. Subsequently, the produced beverage may be degassed and pasteurised. The final product is filled into appropriate containers, e.g. bottles.

Examples

In the following, the test methods are described. The chemicals used in the methods are all analysis grade (p.a.) except the HPLC eluents which are HPLC grade solvents

**TEAC-Value:**

The TEAC-Value (Trolox Equivalent Antioxidative Capacity) represents the total antioxidative potential of the beverage. The TEAC assay, originally described by Miller NJ, Rice-Evans C, Davies MJ (1993; Clinical Science 84; 407-412), is based on scavenging of long-lived radical anions (ABTS.-). A modified decolorisation-method (Re R, Pellegrini N, Proteggente A, Pannala A, Yang M, Rice-Evans C (1999) Free Radical Biology & Medicine, Vol. 26, No. 9/10, 1231-1237) was used to measure the antioxidant activity relative to a Trolox standard. In this modification, the colored complex (ABTS.+ radical cation) is build prior contact with antioxidants, whereas in the original method the building of the color and the decolorisation are done simultaneously.

Trolox-Calibration-Solutions are prepared within the range 0.025-0.450mmol/L by diluting a stock solution (with 2.5mmol/L in ethanol) with phosphate buffer pH 7.2-7.4. This phosphate buffer is also used to dilute the samples (beverages, juices, concentrates, purees). For our beverage a sample dilution 1:50 v/v with buffer is recommended. The ABTS-Stock solution is made from 77mg ABTS and 13mg potassium persulfate in 20ml phosphate buffer (prepared one day before analysis). This stock solution is diluted with phosphate buffer to a resulting extinction (measured with a.spectral photometer at 734nm d=lcm) of 0.7 to 0.8. (This working solution is only stable for 1 day!) The decolorisation of the ABTS-complex starts with the addition of antioxidants: 100μl sample or Trolox standard solution are added to 1900μl ABTS solution and mixed well. As reference 100μl phosphate buffer are used instead of sample or standard. Exactly after 6min the extinction at 734nm is measured against the reference. The extinction values of the Trolox standards are used to prepare a calibration curve. The Trolox equivalents of the samples are calculated (in mmol/L) using this calibration curve and taking the dilution factors into account.

**Total Polyphenol content (Folin):**

The Total Polyphenol content (Folin) is measured according Tanner/Brunner (Getränkeanalytik 2.Auflage 1979, Heller Chemie- und Verwaltungsgesellschaft mbH, Schwäbisch Hall): Polyphenolic compounds react with the Folin-Ciocalteu-Reagens to a red colored complex. The absorbance is measured at 720nm with a spectral photometer. For the calibration curve catechin standard solutions are used. The total amount of polyphenols is calculated as mg catechin per litre (or kg). To build up a calibration curve 212.4 mg catechin hydrate is dissolved in 5ml methanol in a 100ml volumetric flask and filled up to mark with demineralized water. This stock solution has a catechin (waterless) content of 2000mg/L. 1,5,10,15,20 and 25ml of this stock solution will be filled up to 50ml each with demineralised water. This results in 6 standard solutions with catechin contents of 40, 200, 400, 600, 800 and 1000mg/L.
Samples are diluted with demineralised water to fit in between the calibration curve.
The photometric measurement is done at 720nm using a spectral photometer and plastic cuvettes with d=1cm. In a reaction vial 8.4ml water + 0.1 ml sample or standard solution + 0.5ml Folin-Ciocalteu-Reagens (e.g. Merck: Art. No. 9001) are mixed thoroughly and after approx. 3 minutes 1ml sodium carbonate solution (20% w/v in water) will be added - mix again. Exactly after 60 minutes the extinction is measured against a reference (instead of sample or standard solution 0.1ml water is used and treated in the same way like the standards or samples).
The Total Polyphenol Content as referred to herein is calculated as catechin in mg/L. It yields the content of all components of the beverage which react with the Folin-Ciocalteu-Reagens in the way discussed above. Sample dilution is taken into account.

**Content of non-polymerized polyphenols - colorless polyphenols and anthocyanes:**

The content of non-polymerized polyphenols - colorless polyphenols and anthocyanes -can be, measured using High Performance Liquid Chromatography (HPLC) with Diode Array Detection at different wavelengths.
Sample preparation, especially for flavanons and their glucosides:

10ml sample (beverage) is diluted in 10ml dimethylformamide (DMF) and 10ml of a freshly prepared solution of 3.55g ammonium oxalate in 1 L demineralised water. This mixture will be heated at 90°C for 10min (e.g. in a waterbath). After cooling down to room temperature this solution will be filled up to 50ml with demineralised water.

Sample preparation for turbid samples or samples with fruit cells: 102ml beverage are diluted to 25ml with methanol and stirred for 1 hour using a magnetic stirrer.
Solid Phase Extraction (SPE) using C18-SPE-cartridges. The clear or filtered beverage will be separated into a neutral and an acidic fraction using 500mg-C18-cartridges. The neutral cartridge will be preconditioned with 20 bed volumes of methanol and 20 bed volumes of water (pH 6), the acidic cartridge will be preconditioned with 20 bed volumes of methanol and 20 bed volumes of acetic acid 0.5%. 2ml of the beverage will be put on the neutral cartridge. After washing with 5ml water the collected eluate will be adjusted to pH 2 with hydrochloric acid and transferred onto the acidic cartridge. After washing with 5ml acetic acid 5% the eluate will be discarded. The adsorbed polyphenols will be washed off the columns by 5ml methanol for each column. The eluates will be concentrated to 2ml each using a nitrogen stream.
Solid Phase Extraction (SPE) using Polyamide-SPE-cartridges with 1g polyamide (e.g. Chromabond PA 1000mg from Macherey&Nagel), preconditioned with methanol (20ml). 2ml beverage (clear or filtered) will be given onto the column. A neutral fraction will be eluted with 5ml of methanol, an acidic fraction will be eluted using 5ml methanol/formic acid 98.5/1.5 v/v. The eluates should be concentrated under a nitrogen stream to 2ml each.
For the HPLC analysis all samples have to be filtered through a membrane filter 0.45μm or 0.2μm.

HPLC conditions:

HPLC device with diode array detector, gradient pump, column heater

Column: LiChrospher RP18 5 mm 250x4.6mm + 10x4 mm

Column temperature: 40 °C

Eluent A: 40mM formic acid in water,

Eluent B: 40mM formic acid in methanol

Gradient from 10% B to 100%B within 60 minutes

Flow: 1 ml/min.

Detection: 220-600nm

fixed wavelengths:

510nm anthocyanes

325nm hydroxycinnamic acids

355nm Flavons, Flavonols

280nm flavanols, flavanons and others

**Measurement of the total anthocyanes content using a spectral photometer at 510nm:**

The samples are diluted with citrate buffer pH 3.2 and filtered through a 0.45 $\mu$m membrane filter. 0.1 ml of the sample is filled into a plastic cuvette (d=1cm) and mixed with 3ml citrat buffer. The extinction of this dilution is measured against citrat buffer (as reference) at 510nm. In the same way like the samples standard solutions of callistephinchlorid are measured to build up a calibration curve between extinction 0.1 and 1.0.

The total amount of anthocyanes is calculated as mg callistephinchlorid/L or mg callistephinchlorid/kg.

To measure the ratio of condensed or polymerised anthocyanes to free or monomeric anthocyanes the following procedure should be used:

0.1ml beverage + 3ml citrate buffer pH 3.2 + 0.1ml hydrochloric acid 5% are mixed in a photometric plastic cuvette d=1cm measure extinction E1 at 510nm

Add 0.1g potassium disulfite, mix and measure extinction E2 (510nm) after 20min.

The quotient E1/E2 = MI (Monomeric Index)

$$\% \text{ condensed anthocyanes} = 100\% / MI$$

**Analysis of flavanols and procyanidines B1 and B2:**

For the analysis of flavanols and procyanidines a HPLC method with postcolumn derivatisation using p-dimethylaminocinnamaldehyde (DMACA) was used. This method is described by Treutter et.al. in the Journal of Chromatography A, 667 (1994) 290-297.

HPLC conditions:

HPLC device with diode array detector or VIS detector, gradient pump, column heater

Additional pump for derivatisation reagent, postcolumn reactor (10m knitted teflon tubing ID 0.1mm) + heater

Derivatisation reagens: 5g DMACA in methanol/sulfuric acid 550ml/50ml

Derivatisation time: 1.7min

Derivatisation temperature: 30°C

Column: 2 columns of Hyperclone RP18 3 mm 150x4mm connected in series

Column temperature: 30°C

Eluent A: 5% formic acid in water,

Eluent B: 5% formic acid in methanol

Gradient: 10% Eluent B to 100% Eluent B within 120 minutes

Flow: 0.5 ml/min.

Detection: 220-600nm
fixed wavelengths: 640nm

Calibration: External Standard curves with commercially available flavanols and procyanidines B1 and B2

Storage Test

In the storage test, two samples of 0.1 L of the fruit juice of Example 1 were stored for 14 weeks. The first sample is stored in standard PET containers, while the second sample is stored in containers made of Multilayer PET. During the storage test, every 2 weeks a small sample of each container is analysed for vitamin C content (ascorbic acid), total polyphenol content and color nuance at 530nm/420nm. The test showed that the stability of the fruit juice of Example 1 is not substantially influenced by the choice of Multilayer PET or Standard PET. The samples were storage stable for 3 months at temperatures below +8°C.

In Vitro Tests

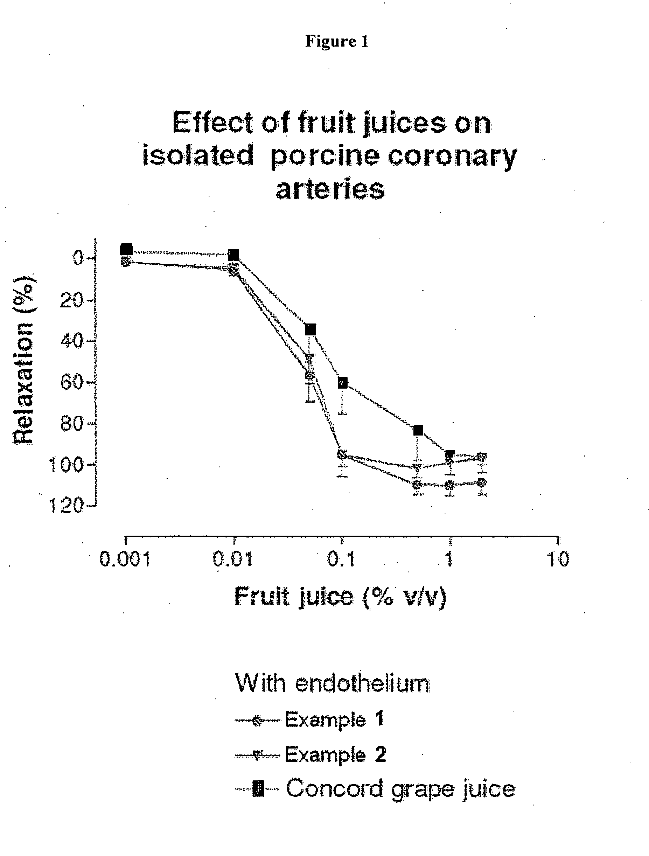

The vascular reactivity of the fruit juices of Examples 1 and 2 was assessed using isolated porcine coronary artery rings from healthy animals. This biological material has been chosen as model due to the similar behaviour to the human coronary system. The fruit juice is diluted to 0.1 %v/v and added to the organ chamber with increasing volumes. Assays have been done on coronary rings with and without endothelium.
Relaxation is observed only for. coronary with endothelium: the juices induce potent endothelium dependant relaxation in coronary artery rings. Only small relaxation is observed with PP poor juices like clear non colored apple juice (0.2 g PP/L) or orange juice (0.3 g PP/L).
CGJ Concord grape juice induces endothelium-dependent relaxations of coronary arteries (ANSELM et al. 2007). Even better results were obtained with the beverage of Example 1 and Example 2 (See Figure 1).
This very positive result of the *in vitro* assay allows the conclusion that a positive effect on the vascular status of other mammals, in particular humans can also be expected.

Clinical Study

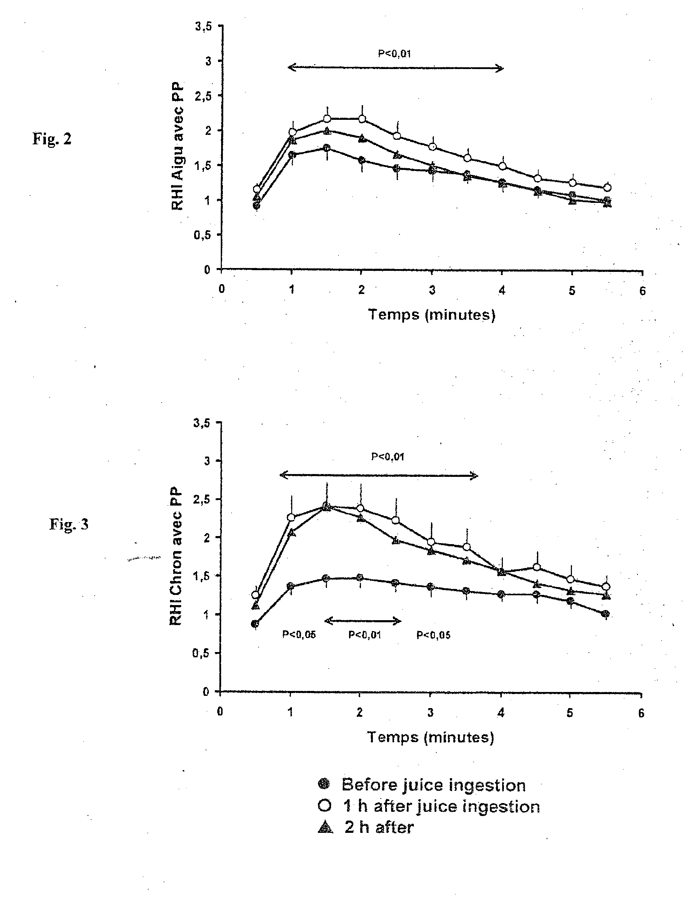

In a clinical study, 20 healthy subjects consumed 200ml per day fruit juice of Example 1 during 14 days, separated by one week washing out period (cross-over study).. Endothelial function was assessed by the ischemic reactive hyperemia test (RHI) determined by using peripheral arterial tonometry before and 1 and 2 hours after juices ingestion. This measurement, has been made after the first 200ml consumption (1st day of the study => acute effect) and after 14 days of consumption (chronic effect). The two types of data have been compared.
"Acute": (see Figure 2) This result can be considered as To for the measurement of FMD (flow-mediated dilatation) on tested people. It is an index of cardiovascular status of tested people. The data proved the standard vascular status of the patient (healthy people with no true endothelial dysfunction).
"Chronic": (see Figure 3) This graph after 14 days of consumption shows an improvement of the vascular status due to a higher dilatation capability versus the initial measurement ("chronic" versus "acute").

Example 1

Grape juice concentrate, acerola puree, strawberry puree, lingonberry juice concentrate, blueberry puree, aronia juice concentrate, apple puree and boysenberry puree having a total polyphenol content (photometrically measured) (PP mg/kg) and a specific gravity (°Brix) as indicated in Table 1 were mixed in amounts such as to obtain a polyphenol content in the beverage (PP mg/L) as indicated in Table 1 to achieve a fruit juice. The fruit juice had a specific gravity of 14 °Bx, a pH of 3.4 $\pm$ 0.3, a vitamin C content of 450 to 470 m/L, a TEAC of 36 $\pm$ 2 mmol/L and a total polyphenol content of 3.5 g/L ($\pm$ 10%).

The HPLC analysis of the fruit juice is shown in the following:

monomeric anthocyanes: 253 mg/L;

hydroxybenzoic acids: 28 mg/L;

hydroxycinnamic acids: 165 mg/L;

flavonols: 21 mg/L; and

flavanols, including procyanidines: 69 mg/L.

flavanols, without procyanidines: 42mg/L

procyanidines: 27 mg/L

Table 1

|  | °Brix | PP mg/kg | Net weight g/L | PP mg/L |
|---|---|---|---|---|
| Grape juice conc. | 65 | 10000 | 160 | 1600 |
| Acerola Puree | 6,5 | 9601 | 42 | 403 |
| Strawberry Puree | 8 | 2622 | 106 | 278 |
| Lingonberry juice conc. | 65 | 21190 | 8,1 | 172 |
| Blueberry Puree | 9 | 5587 | 106 | 592 |
| Aronia Juice conc. | 66 | 35112 | 9,6 | 337 |
| Apple puree | 14 | 1470 | 105 | 154 |
| +520g demineralised water. | | | | |

Example 2

Similar to the method of Example 1 the components shown in Table 2 were mixed to achieve a fruit juice. The fruit juice had a vitamin C content of 480 to 500 mg/L, a TEAC of 36 $\pm$ 2 mmol/L and a total polyphenol content of 3.3 g/L ($\pm$ 10%).

Table 2

|  | °Brix | PP mg/kg | Net weight g/L | PP mg/L |
|---|---|---|---|---|
| Grape Juice Conc. | 65 | 10000 | 158 | 1580 |
| Acerola Puree | 6,5 | 9601 | 42 | 403 |
| Blackberry Puree | 8 | 3900 | 53 | 207 |
| Lingonberry Juice Conc. | 65 | 21190 | 8,1 | 172 |
| Aronia Juice Conc. | 66 | 35112 | 9,6 | 337 |
| Apple Puree | 14 | 1470 | 105 | 154 |

(continued)

|  | °Brix | PP mg/kg | Net weight g/L | PP mg/L |
|---|---|---|---|---|
| Blackcurrant Puree | 13 | 4300 | 105 | 452 |
| +575g demineralised water | | | | |

## Claims

1. Beverage comprising pulp, puree or juice of at least grape, acerola, lingonberry and apple, and comprising flavonoids, phenolic acids and water, wherein the total polyphenol content, determined according to the Folin method and expressed as catechin equivalents, is at least 2.5 g/L and the trolox equivalent antioxidative capacity (TEAC) is at least 20 mmol/L, and the beverage has a specific gravity of 8 to 20 °Brix.

2. Beverage according to claim 1 wherein the total polyphenol content consists of polyphenols of fruits.

3. Beverage according to claim 1 or 2, wherein the content of non-polymerized polyphenols, determined according to the HPLC method and expressed as catechin equivalents, is at least 500 mg/L.

4. Beverage according to any one of claims 1 to 3, comprising a total content of monomeric anthocyanes, determined according to the HPLC method, of at least 200 mg/L.

5. Beverage according to claim 4, wherein the weight ratio of the contents of any monomeric anthocyanes and any non-polymerized colorless polyphenols is 1:1 to 1:4, preferably 1:1 to 1:2.

6. Beverage according to claim 1, wherein the mixture of fruit juice(s), fruit pulp(s) and/or fruit puree(s) provides the polyphenol content of at least 2.5 g/L, based on the total volume of the beverage.

7. Beverage according to any one of claims 1 to 6 which consists of raw materials obtainable from fruits and optional additional water.

8. Beverage according to any one of claims 1 to 7, which is a fruit juice.

9. Beverage according to any one of claims 1 to 8, having a specific gravity of 10 to 17 °Bx.

10. Beverage according to any one of claims 1 to 9, having a pH of 3.0 to 4.2.

11. Beverage according to any one of claims 1 to 10, having a trolox equivalent antioxidative capacity of at least 30 mmol/L:

12. Beverage according to any one of claims 1 to 11, having a total polyphenol content, determined according to the folin method and expressed as catechin, of at least 3.0 g/L.

13. Beverage according to any one of claims 1 to 12, wherein the sum of the contents of flavanols, including procyanidines, and flavonols is greater than 60 mg/L.

## Patentansprüche

1. Getränk, umfassend Pulpe, Püree oder Saft von mindestens Traube, Acerola, Preiselbeere und Apfel und umfassend Flavonoide, Phenolsäuren und Wasser, wobei der Gesamt-Polyphenolgehalt, bestimmt nach der Folin-Methode und ausgedrückt als Catechin-Äquivalente, mindestens 2,5 g/l beträgt und die Trolox-Äquivalent-antioxidative Kapazität (TEAC) mindestens 20 mmol/l beträgt und das Getränk eine relative Dichte von 8 bis 20° Brix aufweist.

2. Getränk nach Anspruch 1, wobei der Gesamt-Polyphenolgehalt aus Polyphenolen von Früchten besteht.

3. Getränk nach Anspruch 1 oder 2, wobei der Gehalt an nicht-polymerisierten Polyphenolen, bestimmt nach dem HPLC-Verfahren und ausgedrückt als Catechin-Äquivalente, mindestens 500 mg/l beträgt.

**4.** Getränk nach einem der Ansprüche 1 bis 3, umfassend einen Gesamtgehalt an monomeren Anthocyanen, bestimmt nach dem HPLC-Verfahren, von mindestens 200 mg/l.

**5.** Getränk nach Anspruch 4, wobei das Gewichtsverhältnis der Gehalte aller monomeren Anthocyane und aller nicht-polymerisierten farblosen Polyphenole 1:1 bis 1:4, vorzugsweise 1:1 bis 1:2, beträgt.

**6.** Getränk nach Anspruch 1, wobei das Gemisch aus Fruchtsaft/-säften, Fruchtpulpe/-pulpen und/oder Fruchtpüree/-pürees den Polyphenolgehalt von mindestens 2,5 g/l, bezogen auf das Gesamtvolumen des Getränks, bereitstellt.

**7.** Getränk nach einem der Ansprüche 1 bis 6, welches aus Rohstoffen besteht, die aus Früchten erhältlich sind, und optionalem zusätzlichem Wasser.

**8.** Getränk nach einem der Ansprüche 1 bis 7, bei welchem es sich um einen Fruchtsaft handelt.

**9.** Getränk nach einem der Ansprüche 1 bis 8 mit einer relativen Dichte von 10 bis 17° Bx.

**10.** Getränk nach einem der Ansprüche 1 bis 9 mit einem pH-Wert von 3,0 bis 4,2.

**11.** Getränk nach einem der Ansprüche 1 bis 10 mit einer Trolox-Äquivalent-antioxidativen Kapazität von mindestens 30 mmol/l.

**12.** Getränk nach einem der Ansprüche 1 bis 11 mit einem Gesamt-Polyphenolgehalt, bestimmt nach der Folin-Methode und ausgedrückt als Catechin, von mindestens 3,0 g/l.

**13.** Getränk nach einem der Ansprüche 1 bis 12, wobei die Summe der Gehalte an Flavanolen, einschließlich Procyanidinen, und Flavonolen größer als 60 mg/l ist.

**Revendications**

**1.** Boisson comprenant de la pulpe, de la purée ou du jus d'au moins le raisin, l'acérola, les airelles et la pomme, et comprenant des flavonoïdes, des acides phénoliques et de l'eau, dans laquelle la teneur totale en polyphénol, déterminée selon le procédé de Folin et exprimée en équivalents de catéchine, est au moins 2,5 g/l et la capacité antioxydante équivalente de trolox (TEAC) est au moins 20 mmol/l, et la boisson a une densité de 8 à 20 °Brix.

**2.** Boisson selon la revendication 1 dans laquelle la teneur totale en polyphénol est constituée de polyphénols de fruits.

**3.** Boisson selon la revendication 1 ou 2, dans laquelle la teneur de polyphénols non polymérisés, déterminée selon le procédé CLHP et exprimée en équivalents de catéchine, est au moins 500 mg/l.

**4.** Boisson selon l'une quelconque des revendications 1 à 3, comprenant une teneur totale d'anthocyanes monomères, déterminée selon le procédé CLHP, d'au moins 200 mg/l.

**5.** Boisson selon la revendication 4, dans laquelle le rapport en poids des teneurs d'anthocyanes monomères et de polyphénols incolores non polymérisés est de 1:1 à 1:4, de préférence 1:1 à 1:2.

**6.** Boisson selon la revendication 1, dans laquelle le mélange de jus de fruit, pulpe(s) de fruit et/ou purée(s) de fruit produit la teneur en polyphénol d'au moins 2,5 g/l, sur la base du volume total de la boisson.

**7.** Boisson selon l'une quelconque des revendications 1 à 6 qui est constituée de matières premières pouvant être obtenues à partir de fruits et d'eau additionnelle facultative.

**8.** Boisson selon l'une quelconque des revendications 1 à 7, qui est un jus de fruit.

**9.** Boisson selon l'une quelconque des revendications 1 à 8, ayant une densité de 10 à 17 °Bx.

**10.** Boisson selon l'une quelconque des revendications 1 à 9, ayant un pH de 3,0 à 4,2.

EP 2 299 852 B1

**11.** Boisson selon l'une quelconque des revendications 1 à 10, ayant une capacité antioxydante équivalente de trolox d'au moins 30 mmol/l.

**12.** Boisson selon l'une quelconque des revendications 1 à 11, ayant une teneur totale en polyphénol, déterminée selon le procédé de Folin et exprimée en catéchine, d'au moins 3,0 g/l.

**13.** Boisson selon l'une quelconque des revendications 1 à 12, dans laquelle la somme des teneurs en flavanols, comprenant des procyanidines, et des flavonols est supérieure à 60 mg/l.

Figure 1

**Effect of fruit juices on isolated porcine coronary arteries**

With endothelium

—⊖— Example 1

—▽— Example 2

—■— Concord grape juice

Fig. 2

Fig. 3

● Before juice ingestion
○ 1 h after juice ingestion
▲ 2 h after

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2899768 A1
- JP 2000125823 A
- AU 2006235822 A1
- EP 713706 A2
- JP 2006306797 A
- US 20060088610 A1
- WO 2006083666 A1
- US 6291517 B1
- EP 0954986 A3
- WO 2008025627 A1
- DE 102004052882 A1

**Non-patent literature cited in the description**

- **N. P. SEERAM et al.** *J. Agric. Food Chem.,* 2008, vol. 56 (4), 1415-1422
- **M.J. BERMÚDEZ-SOTA et al.** *Eur. Food Res. Technol.,* 2004, vol. 219, 133-141
- **MILLER NJ ; RICE-EVANS C ; DAVIES MJ.** *Clinical Science,* 1993, vol. 84, 407-412
- **RE R ; PELLEGRINI N ; PROTEGGENTE A ; PANNALA A ; YANG M ; RICE-EVANS C.** *Free Radical Biology & Medicine,* 1999, vol. 26 (9/10), 1231-1237
- **TREUTTER.** *Journal of Chromatography A,* 1994, vol. 667, 290-297